# FASCICULE DE BREVET EUROPEEN

(11) **EP 4 435 258 B1**
(45) Date de publication et mention de la délivrance du brevet: **08.10.2025**
(21) Numéro de dépôt: 24159896.0
(22) Date de dépôt: 27.02.2024
(51) Int. Cl.: F04B 15/08, F17C 5/02, F17C 5/06, F17C 9/02

(54) **DISPOSITIF ET PROCÉDÉ DE COMPRESSION**
KOMPRESSIONSVORRICHTUNG UND -VERFAHREN
COMPRESSION DEVICE AND METHOD

(30) Priorité: 21.03.2023 FR 2302594
(43) Date de publication de la demande: 25.09.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: TRY, Rasmey, 38360 SASSENAGE (FR)
(74) Mandataire: Air Liquide

(56) Documents cités:
- EP-A1- 2 535 585
- EP-B1- 2 673 507
- EP-B1- 3 365 613
- FR-A1- 2 904 401
- FR-A1- 3 107 103

## Description

L'invention concerne un dispositif et un procédé de compression.

L'invention concerne plus particulièrement un dispositif de compression d'un fluide comportant une chambre de compression abritant un piston mobile, le dispositif comprenant une première extrémité abritant une première extrémité de la chambre de compression, le dispositif comprenant une seconde extrémité abritant une seconde extrémité de la chambre de compression, le piston étant mobile en translation entre les première et seconde extrémités de la chambre de compression, le dispositif comprenant un circuit de régénération reliant les première et seconde extrémités de la chambre de compression et comportant un régénérateur, le dispositif comprenant une conduite d'alimentation comprenant une extrémité amont destinée à être reliée à une source de fluide à comprimer et une extrémité aval débouchant dans la première extrémité de la chambre de compression, la conduite d'alimentation comprenant un ensemble de clapet(s), le dispositif comprenant au moins une conduite d'évacuation du fluide comprimé comprenant une extrémité amont reliée à la chambre de compression et une extrémité aval destinée à être reliée à un récepteur du fluide comprimé.

Les documents EP2673507B1, FR2904401A1 et FR3007077A1 décrivent un tel dispositif de compression parfois appelé « compresseur thermique ».

Les dispositifs de ce type peuvent présenter une efficacité satisfaisante. Il est recherché des solutions pour améliorer cette efficacité et par exemple l'optimisation énergétique pour la gestion de la pression dans le stockage d'alimentation du dispositif.

En fonctionnement un tel dispositif comprend généralement les étapes suivantes.

Compression: le piston est en position extrême dans la seconde extrémité de la chambre de compression (côté relativement chaud du dispositif). Le clapet de la conduite d'alimentation a été ouvert, du fluide (gaz ou liquide) a été précédemment introduit et remplit le volume de la première extrémité de la chambre de compression (à partir du réservoir sous pression ou via une pompe). Ensuite, le piston est actionné vers la première extrémité de la chambre de compression. Ceci entraine un transfert de fluide de la première extrémité (froide) vers la seconde extrémité (chaude). En pratique, la force nécessaire n'est limitée que par l'impédance de transfert du gaz à travers le régénérateur.

Lorsque le gaz se réchauffe dans la seconde extrémité chaude, la pression commence à augmenter dans le système. Le clapet de la conduite d'alimentation est fermé et le clapet de la conduite d'évacuation reste fermé tant que la pression est inférieure à un seuil d'ouverture (par exemple la pression d'un réservoir de sortie relié à la conduite d'évacuation). La masse de fluide excédentaire est alors expulsée par le clapet de la conduite d'évacuation à une pression de préférence constante. Lorsque le piston arrive à sa position extrême au fond de la première extrémité de la chambre de compression, il occupe de préférence tout ce volume d'extrémité de la chambre de compression. Lors du transfert de la chambre chaude vers la chambre froide, le froid du fluide provenant de la chambre froide stocke le froid dans les parois du régénérateur, qui sera restitué au fluide dans la phase de régénération.

Régénération: le piston est déplacé à nouveau vers la seconde extrémité de la chambre de compression (phase de régénération). Ceci déplace le fluide de la seconde extrémité (chaude) vers la première extrémité (froide) de la chambre de compression. Pendant ce processus, le flux de masse se déplace de la seconde extrémité (chaude) vers la première extrémité (froide). Le fluide récupère le froid stocké dans les parois du régénérateur. Lorsque le fluide se refroidit, la pression dans le dispositif de compression commence à baisser. Lorsque la pression dans la première extrémité de la chambre de compression devient inferieure à un seuil, le clapet de la conduite d'évacuation se ferme et le clapet de la conduite d'alimentation peut à nouveau s'ouvrir pour recommencer le processus.

Cette dernière étape peut générer une grande perte d'efficacité du compresseur thermique. Le fluide revenant de la chambre chaude porte en effet les inefficacités de l'échangeur régénératif (pincement en température) et de compression (différentiel de température dû à la compression du cycle précédent).

Par exemple, dans le cas de la compression de l'hydrogène liquide de 1 bar à 20 bar, la température augmente naturellement de 20,2 K à 21,1 K en raison de la compression. C'est-à-dire que le côté froid du régénérateur sera à minima à une température de 21,1 K. C'est-à-dire que le fluide revenant de la chambre chaude sera au mieux supérieure ou égale à 21,1 K, plus le pincement du régénérateur. La quantité de chaleur injectée dans la chambre froide correspond alors au débit de retour de la chambre chaude multiplié par la différence d'enthalpie entre 20,2 K et 21,1 K.

L'invention propose une amélioration de l'efficacité du compresseur thermique et/ou une optimisation énergétique pour diminuer la consommation de pressurisation du stockage d'alimentation du compresseur thermique.

A cette fin, l'invention proposes un dispositif selon la revendication 1, dont le circuit de régénération comprend, entre le régénérateur et la première extrémité de la chambre de compression, un échangeur de chaleur configuré pour assurer un échange de chaleur entre le flux de fluide ayant transité par le régénérateur et une source froide, et qui est caractérisée en ce que la source de fluide à comprimer comprend un réservoir de fluide liquéfié, par exemple de fluide cryogénique liquéfié reliée à l'extrémité amont de la conduite d'alimentation, et en ce que la source froide comprend une conduite de prélèvement d'un flux fluide cryogénique de la source de fluide et assurant un passage dans l'échangeur de chaleur.

Par ailleurs, des modes de réalisation de l'invention peuvent comporter l'une ou plusieurs des caractéristiques suivantes :
- la source froide comprend un flux de fluide cryogénique,
- la source de fluide à comprimer comprend un réservoir de fluide liquéfié, par exemple de fluide cryogénique liquéfié reliée à l'extrémité amont de la conduite d'alimentation, la source froide comprenant une conduite de prélèvement d'un flux fluide cryogénique de la source de fluide et assurant un passage dans l'échangeur de chaleur,
- la conduite de prélèvement est une dérivation de la conduite d'alimentation,
- la conduite de prélèvement décrit une boucle reliée à la source de fluide et configurée pour former un thermosiphon,
- la conduite de prélèvement comprend un ensemble de vanne(s) par exemple au moins une vanne de régulation de pression et/ou de débit,
- l'ensemble de clapet(s) de la conduite d'alimentation comprend un organe anti-retour tel qu'un clapet anti-retour,
- la seconde extrémité du dispositif comprend un système de réchauffage,
- la première extrémité du dispositif comprend un système de refroidissement ou de réchauffage,
- le régénérateur comprend un tube échangeur de chaleur, notamment un tube cylindrique, rempli d'un matériau configuré pour emmagasiner et restituer la chaleur et laisser passer le fluide à l'état liquide et/ou gazeux.

L'invention concerne également un procédé de compression de fluide au moyen d'un dispositif conforme à l'une quelconque des caractéristiques ci-dessus ou ci-dessous, caractérisé en ce qu'il comprend les étapes successives suivantes: a) admission d'un fluide à l'état liquide à une pression initiale dans la première extrémité de la chambre de compression via la conduite d'alimentation, b) compression par déplacement du piston vers la première extrémité de la chambre de compression et transfert du fluide de la première extrémité de la chambre de compression vers la seconde extrémité de la chambre de compression via la conduite de régénération, la seconde extrémité du dispositif étant maintenue à une température supérieure à la température de la première extrémité, c) régénération par déplacement du piston vers la seconde extrémité de la chambre de compression et transfert du fluide de la seconde extrémité de la chambre de compression vers la première extrémité de la chambre de compression via le régénérateur, le procédé comprenant, lors de l'étape c) de régénération, une étape de refroidissement du flux de fluide ayant transité dans le régénérateur.

Selon d'autres particularités possibles, l'admission du fluide à l'état liquide à une pression initiale dans la première extrémité de la chambre de compression est réalisée à partir d'un réservoir de fluide liquéfié, l'étape de refroidissement utilisant du fluide du réservoir pour refroidir le flux de fluide.

L'invention peut concerner également tout dispositif ou procédé alternatif comprenant toute combinaison des caractéristiques ci-dessus ou ci-dessous dans le cadre des revendications. D'autres particularités et avantages apparaîtront à la lecture de la description ci-après, faite en référence aux figures dans lesquelles :

### Brève description des figures

L'invention sera mieux comprise à la lecture de la description qui va suivre donnée uniquement à titre d'exemple et faite en se référant au dessin annexés dans lesquel :

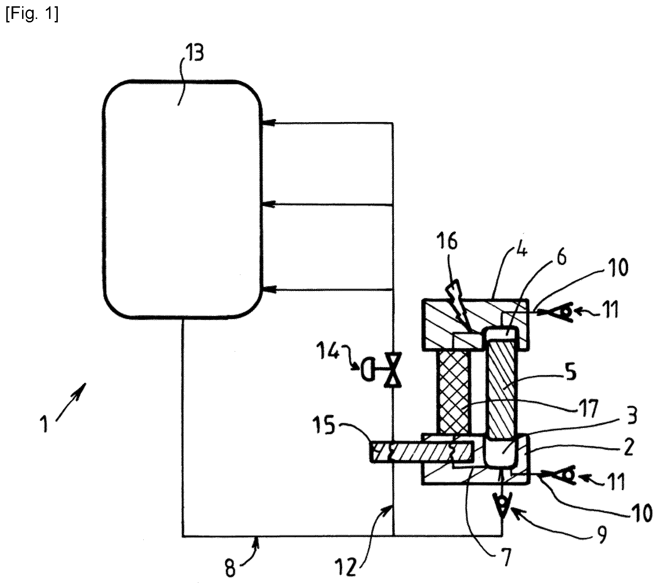

[Fig. 1] représente une vue en coupe, schématique et partielle illustrant un exemple de structure et fonctionnement d'un exemple de réalisation d'un dispositif de compression selon l'invention,

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

Le dispositif 1 de compression d'un fluide illustré à la [Fig. 1] (ou « compresseur thermique ») comprend un bâti ou carter abritant une chambre de compression dans laquelle est logé un piston 5 mobile. Le dispositif 1 comprend une première extrémité 2 abritant une première extrémité 3 de la chambre de compression (extrémité relativement froide), le dispositif 1 comprenant une seconde extrémité 4 abritant une seconde extrémité 6 de la chambre de compression (extrémité relativement chaude). Dans ce compresseur, les deux chambres ou extrémités 3, 6 sont généralement à la pratiquement à la même pression, aux pertes de charge de l'échangeur régénératif près. Un système de réchauffage 16 peut être prévu au niveau de la seconde extrémité.

Le piston 5 est mobile en translation entre les première 3 et seconde 6 extrémités de la chambre de compression (via tout système d'entrainement approprié et non décrit par soucis de simplification).

Le dispositif 1 comprend une conduite 7 de régénération reliant les première 3 et seconde 6 extrémités de la chambre de compression et comportant un régénérateur 17.

Le dispositif 1 comprend en outre une conduite 8 d'alimentation ayant une extrémité amont destinée à être reliée à une source 13 de fluide à comprimer et une extrémité aval débouchant dans la première extrémité 3 de la chambre de compression. La source 13 est de préférence un réservoir de fluide cryogénique, par exemple de l'hydrogène liquéfié.

Le réservoir 13 contient de préférence un fluide cryogénique sous forme diphasique et alimente le dispositif de compression thermique avec du liquide, de préférence dans un état proche de la saturation et pouvant éventuellement être en sous refroidi. Sur le schéma, il n'est pas représenté des organes de contrôle de la pression du réservoir 13 (système de pressurisation et/ou dépressurisation) qui peuvent être prévus de façon classique.

La conduite 8 d'alimentation comprend un ensemble de clapet(s) ou vanne(s), notamment un clapet 9 anti-retour. Le dispositif 1 comprend au moins une conduite 10 d'évacuation du fluide comprimé comprenant une extrémité amont reliée à la chambre de compression et une extrémité aval destinée à être reliée à un récepteur du fluide comprimé. Cette conduite 10 d'évacuation comprend également un ensemble de clapet(s) ou vanne(s), par exemple un clapet 11 anti retour. Par exemple, la conduite 10 d'évacuation du fluide comprimé a son extrémité amont reliée à la première et/ou la seconde extrémité de la chambre de compression.

Par exemple, et comme illustré, le dispositif 1 peut comporter deux sorties d'évacuation (à partir de la chambre chaude et de la chambre froide). Il est également possible d'envisager une évacuation à une température intermédiaire entre ces deux extrémités.

Par exemple, l'extrémité amont de la conduite 10 d'évacuation du fluide comprimé est reliée à la première extrémité 3 de la chambre de compression. C'est-à-dire que le fluide comprimé est évacué à partir de l'extrémité 3 relativement froide du dispositif 1. Ceci permet de produire du fluide comprimé relativement froid.

La conduite 7 de régénération est de préférence distincte de la conduite 10 d'évacuation. C'est-à-dire que cette conduite 7 de régénération relie les deux extrémités 3, 6 de la chambre de compression en passant par le régénérateur 17 et ne permet ainsi que le transit direct entre ces extrémités lors des mouvements du piston 5.

L'extrémité aval de la conduite 8 d'alimentation est de préférence reliée directement à la première extrémité 3 de la chambre de compression, c'est-à-dire sans passer par une chambre de pré-compression. C'est-à-dire que le fluide à comprimer est injecte directement dans la chambre 3 de compression.

Classiquement, le régénérateur 17 peut comprendre un tube échangeur de chaleur, notamment un tube cylindrique, rempli d'un matériau configure pour emmagasiner et restituer la chaleur et laisser passer le fluide à l'état liquide et/ou gazeux. Bien entendu, tout autre structure appropriée d'échangeur de chaleur peut être envisagée.

Un fonctionnement peut être le suivant. Dans une première étape de compression la première extrémité 3 (froide) est remplie de fluide froid fourni par le réservoir 13. La seconde extrémité 6 (chaude) est son volume minimal. Le piston 3 est déplacé de la seconde extrémité 6 vers la première extrémité 3, forçant le passage du fluide dans le régénérateur 17. Le fluide se réchauffe dans le régénérateur et éventuellement dans un échangeur supplémentaire.

Le fluide ainsi réchauffé permet de pressuriser les extrémités 3, 6 de la chambre de compression (iso-pression). Une fois que la pression de refoulement est atteinte, le clapet 11 de sortie s'ouvre. Dans une phase suivante de régénération et d'injection : le piston 5 est déplacé de la première 3 vers la seconde 6 extrémité, forçant alors le fluide à passer à nouveau dans le régénérateur 17. Le fluide se refroidit et permet de diminuer la pression au sein du compresseur. Une fois cette pression inférieure à celle du réservoir 13, le clapet 9 d'alimentation du s'ouvre. Ainsi, le fluide d'entrée (venant du réservoir 13) et le fluide revenant du régénérateur 17 se mélangent dans la chambre froide (première extrémité 3). Le niveau de liquide dans le réservoir d'alimentation diminue ce que fait diminuer la pression au sein du réservoir 13. Un système interne ou externe de pressurisation peut permettre d'y maintenir une pression.

Selon une particularité avantageuse, le dispositif 1 comprend, de préférence au niveau du circuit 7 de régénération, entre le régénérateur 17 et la première 3 extrémité de la chambre de compression, un échangeur 15 de chaleur configuré pour assurer un échange de chaleur entre le flux de fluide ayant transité par le régénérateur 17 et une source froide.

L'intégration d'un tel échangeur 15 de chaleur sur la partie froide du compresseur thermique permet de réaliser un échange thermique entre le fluide revenant de la seconde chambre (extrémité 6) chaude du compresseur thermique, dont le flux porte les inefficacités de l'échange de chaleur avec de l'échangeur régénératif (régénérateur 17) décrit précédemment. Ceci permet de refroidir le fluide revenant de la seconde extrémité 6 jusqu'à une température proche de la température du liquide admis à l'entrée dans la première 3 extrémité. Ceci réduit la quantité de chaleur renvoyée dans la chambre froide (première extrémité 3) due à l'inefficacité de la compression.

Comme illustré, la source froide peut comprendre une conduite 12 de prélèvement d'un flux fluide cryogénique de la source 13 de fluide et assurant un passage dans l'échangeur 15 de chaleur. Par exemple, la conduite de prélèvement est une dérivation de la conduite 8 d'alimentation.

Le fluide froid peut être prélevé au niveau de l'alimentation du compresseur thermique, correspondant au point le plus froid du système. En passant dans l'échangeur 15 de chaleur froid, cette dérivation de l'alimentation du compresseur thermique se réchauffe et peut se vaporiser.

Comme illustré, la conduite 12 de prélèvement peut former une boucle dont deux extrémités sont reliées à la source 13 de fluide et la boucle est configurée pour former un thermosiphon.

Ainsi, le fluide revenant de la chambre 6 ou seconde extrémité chaude du compresseur thermique retourne dans la chambre ou extrémité 3 froide à une température proche de la température du fluide d'entrée et le mélange est effectué avec le fluide d'alimentation. L'utilisation de cet échangeur 15 de chaleur permet alors d'améliorer la teneur en liquide de la chambre froide (première extrémité 3). Ceci augmente l'efficacité du compresseur thermique. La conduite 12 de prélèvement peut comprendre un ensemble de vanne(s) 14 par exemple au moins une vanne de régulation de pression et/ou de débit.

Le fluide froid cryogénique fourni par le réservoir 13 peut avoir une température proche de sa saturation et peut s'évaporer suite à l'échange thermique dans l'échangeur 15 de chaleur. Ce fluide peut être renvoyé dans le réservoir 13 afin de mitiger l'utilisation d'un système de pressurisation. Le fluide peut être renvoyé à n'importe quel niveau (hauteur) dans le réservoir (dans la partie liquide inférieure ou gazeuse supérieure). Cette pressurisation est réalisée avec un fluide ayant une température de retour faible, par exemple proche de la saturation.

Ce circuit 12 de refroidissement est indépendant du compresseur thermique. Le couplage du réservoir 13 avec le circuit 12 de refroidissement constitue de préférence un thermosiphon.

Ainsi, la circulation du fluide de refroidissement dans l'échangeur 15 de chaleur s'établit naturellement avec une force motrice correspondant à la hauteur hydrostatique du réservoir 13 et de la chaleur échangée dans l'échangeur 15 de chaleur. Il n'y a donc pas de besoin de force supplémentaire pour réaliser cette circulation.

Une vanne de régulation peut être intégrée sur la conduite 12 de prélèvement pour limiter le débit du thermosiphon et donc de régler la quantité de fluide renvoyé dans le réservoir 13 pour sa pressurisation.

Le dispositif 1 de compression peut être alimenté en gaz ou en liquide. Dans ce dernier cas des performances de compression plus grandes sont obtenues.

L'invention s'applique avantageusement à la compression d'hydrogène liquide mais pourrait concerner un fluide choisi dans la liste comprenant He, H2, Ne, CO, Ar, N2, 02, CH4, C02, NO, Kr, Xe ou tout mélange de deux ou plus de ces espèces chimiques.

## Revendications

1. Dispositif de compression d'un fluide comportant une chambre de compression abritant un piston (5) mobile, le dispositif comprenant une première extrémité (2) abritant une première extrémité (3) de la chambre de compression, le dispositif (1) comprenant une seconde extrémité (4) abritant une seconde extrémité (6) de la chambre de compression, le piston (5) étant mobile en translation entre les première (3) et seconde (6) extrémités de la chambre de compression, le dispositif (1) comprenant un circuit (7) de régénération reliant les première (3) et seconde (6) extrémités de la chambre de compression et comportant un régénérateur (17), le dispositif (1) comprenant une conduite (8) d'alimentation comprenant une extrémité amont destinée à être reliée à une source (13) de fluide à comprimer et une extrémité aval débouchant dans la première extrémité (3) de la chambre de compression, la conduite (8) d'alimentation comprenant un ensemble de clapet(s) (9), le dispositif (1) comprenant au moins une conduite (10) d'évacuation du fluide comprimé comprenant une extrémité amont reliée à la chambre de compression et une extrémité aval destinée à être reliée à un récepteur du fluide comprimé, le circuit (7) de régénération comprenant, entre le régénérateur (17) et la première (3) extrémité de la chambre de compression, un échangeur (15) de chaleur configuré pour assurer un échange de chaleur entre le flux de fluide ayant transité par le régénérateur (17) et une source froide, **caractérisé en ce que** la source (13) de fluide à comprimer comprend un réservoir (13) de fluide liquéfié, par exemple de fluide cryogénique liquéfié reliée à l'extrémité amont de la conduite (8) d'alimentation, et **en ce que** la source froide comprend une conduite (12) de prélèvement d'un flux fluide cryogénique de la source (13) de fluide et assurant un passage dans l'échangeur (15) de chaleur.

2. Dispositif selon la revendication 1, **caractérisé en ce que** la conduite (12) de prélèvement est une dérivation de la conduite (8) d'alimentation.

3. Dispositif selon l'une quelconque des revendications 1 ou 2, **caractérisé en ce que** la conduite (12) de prélèvement décrit une boucle reliée à la source (13) de fluide et configurée pour former un thermosiphon.

4. Dispositif selon l'une quelconque des revendications 1 à 3, **caractérisé en ce que** la conduite (12) de prélèvement comprend un ensemble de vanne(s) (14) par exemple au moins une vanne de régulation de pression et/ou de débit.

5. Dispositif selon l'une quelconque des revendications 1 à 4, **caractérisé en ce que** l'ensemble de clapet(s) de la conduite (8) d'alimentation comprend un organe (9) anti-retour tel qu'un clapet anti-retour.

6. Dispositif selon l'une quelconque des revendications 1 à 5, **caractérisé en ce que** la seconde extrémité (4) du dispositif (1) comprend un système (16) de réchauffage.

7. Dispositif selon l'une quelconque des revendications 1 à 6, **caractérisé en ce que** la première extrémité (2) du dispositif (1) comprend un système de refroidissement ou de réchauffage.

8. Dispositif selon l'une quelconque des revendications 1 à 7, **caractérisé en ce que** le régénérateur (17) comprend un tube échangeur de chaleur, notamment un tube cylindrique, rempli d'un matériau configuré pour emmagasiner et restituer la chaleur et laisser passer le fluide à l'état liquide et/ou gazeux.

9. Procédé de compression de fluide au moyen d'un dispositif conforme à l'une quelconque des revendications 1 à 8, **caractérisé en ce qu'**il comprend les étapes successives suivantes: a) admission d'un fluide à l'état liquide à une pression initiale dans la première extrémité (3) de la chambre de compression via la conduite (8) d'alimentation, b) compression par déplacement du piston (5) vers la première extrémité (3) de la chambre de compression et transfert du fluide de la première extrémité (3) de la chambre de compression vers la seconde extrémité (6) de la chambre de compression via la conduite (7) de régénération, la seconde extrémité (4) du dispositif (1) étant maintenue à une température supérieure à la température de la première extrémité (2), c) régénération par déplacement du piston (5) vers la seconde extrémité (6) de la chambre de compression et transfert du fluide de la seconde extrémité (6) de la chambre de compression vers la première extrémité (3) de la chambre de compression via le régénérateur, le procédé comprenant, lors de l'étape c) de régénération, une étape de refroidissement du flux de fluide ayant transité dans le régénérateur (17).

10. Procédé selon la revendication 9, **caractérisé en ce que** l'admission du fluide à l'état liquide à une pression initiale dans la première extrémité (3) de la chambre de compression est réalisée à partir d'un réservoir (13) de fluide liquéfié et **en ce que** l'étape de refroidissement utilise du fluide du réservoir pour refroidir le flux de fluide.

## Patentansprüche

1. Vorrichtung zum Komprimieren eines Fluids, die eine Kompressionskammer beinhaltet, die einen beweglichen Kolben (5) aufnimmt, wobei die Vorrichtung ein erstes Ende (2) umfasst, das ein erstes Ende (3) der Kompressionskammer aufnimmt, wobei die Vorrichtung (1) ein zweites Ende (4) umfasst, das ein zweites Ende (6) der Kompressionskammer aufnimmt, wobei der Kolben (5) zwischen dem ersten (3) und dem zweiten (6) Ende der Kompressionskammer translatorisch beweglich ist, wobei die Vorrichtung (1) einen Regenerationskreis (7) umfasst, der das erste (3) und das zweite (6) Ende der Kompressionskammer verbindet und einen Regenerator (17) beinhaltet, wobei die Vorrichtung (1) eine Zuführungsleitung (8) umfasst, die ein stromaufwärtiges Ende, das dazu bestimmt ist, mit einer Quelle (13) für zu komprimierendes Fluid verbunden zu werden, und ein stromaufwärtiges Ende, das in das erste Ende (3) der Kompressionskammer mündet, umfasst, wobei die Zuführungsleitung (8) eine Ventilanordnung (9) umfasst, wobei die Vorrichtung (1) mindestens eine Leitung (10) zum Abführen des komprimierten Fluids umfasst, die ein stromaufwärtiges Ende, das mit der Kompressionskammer verbunden ist, und ein stromabwärtiges Ende, das dazu bestimmt ist, mit einem Aufnehmer für das komprimierte Fluid verbunden zu werden, umfasst, wobei der Regenerationskreis (7) zwischen dem Regenerator (17) und dem ersten (3) Ende der Kompressionskammer einen Wärmetauscher (15) umfasst, der dazu ausgestaltet ist, einen Wärmeaustausch zwischen dem Fluidstrom, der durch den Regenerator (17) geströmt ist, und einer Kältequelle zu gewährleisten, **dadurch gekennzeichnet, dass** die Quelle (13) für zu komprimierendes Fluid einen Behälter (13) für verflüssigtes Fluid umfasst, zum Beispiel für verflüssigtes kryogenes Fluid, der mit dem stromaufwärtigen Ende der Zuführungsleitung (8) verbunden ist, und dadurch, dass die Kältequelle eine Entnahmeleitung (12) zum Entnehmen eines kryogenen Fluidstroms aus der Fluidquelle (13) umfasst und einen Durchgang in den Wärmetauscher (15) gewährleistet.

2. Vorrichtung nach Anspruch 1, **dadurch gekennzeichnet, dass** die Entnahmeleitung (12) ein Bypass der Zuführungsleitung (8) ist.

3. Vorrichtung nach einem der Ansprüche 1 oder 2, **dadurch gekennzeichnet, dass** die Entnahmeleitung (12) einen Kreislauf beschreibt, der mit der Quelle (13) für Fluid verbunden ist und dazu ausgestaltet ist, einen Thermosiphon zu bilden.

4. Vorrichtung nach einem der Ansprüche 1 bis 3, **dadurch gekennzeichnet, dass** die Entnahmeleitung (12) eine Ventilanordnung (14) umfasst, zum Beispiel mindestens ein Druck- und/oder Volumenstromregelungsventil.

5. Vorrichtung nach einem der Ansprüche 1 bis 4, **dadurch gekennzeichnet, dass** die Ventilanordnung der Zuführungsleitung (8) ein Rückflussverhinderungselement (9) wie ein Rückflussverhinderungsventil umfasst.

6. Vorrichtung nach einem der Ansprüche 1 bis 5, **dadurch gekennzeichnet, dass** das zweite Ende (4) der Vorrichtung (1) ein Heizsystem (16) umfasst.

7. Vorrichtung nach einem der Ansprüche 1 bis 6, **dadurch gekennzeichnet, dass** das erste Ende (2) der Vorrichtung (1) ein Kühl- oder Heizsystem umfasst.

8. Vorrichtung nach einem der Ansprüche 1 bis 7, **dadurch gekennzeichnet, dass** der Regenerator (17) ein Wärmetauscherrohr umfasst, insbesondere ein zylindrisches Rohr, das mit einem Material gefüllt ist, das dazu ausgestaltet ist, die Wärme zu speichern und wieder abzugeben und das Fluid im flüssigen und/oder gasförmigen Zustand durchströmen zu lassen.

9. Verfahren zur Kompression von Fluid mittels einer Vorrichtung nach einem der Ansprüche 1 bis 8, **dadurch gekennzeichnet, dass** es die folgenden aufeinander folgenden Schritte umfasst: a) Einlassen eines Fluids im flüssigen Zustand mit einem Anfangsdruck in das erste Ende (3) der Kompressionskammer über die Zuführungsleitung (8), b) Komprimieren durch Verlagern des Kolbens (5) zu dem ersten Ende (3) der Kompressionskammer hin und Transferieren des Fluids von dem ersten Ende (3) der Kompressionskammer zu dem zweiten Ende (6) der Kompressionskammer über die Regenerationsleitung (7), wobei das zweite Ende (4) der Vorrichtung (1) auf einer Temperatur gehalten wird, die höher als die Temperatur des ersten Endes (2) ist, c) Regeneration durch Verlagern des Kolbens (5) zu dem zweiten Ende (6) der Kompressionskammer hin und Transferieren des Fluids von dem zweiten Ende (6) der Kompressionskammer zu dem ersten Ende (3) der Kompressionskammer über den Regenerator, wobei das Verfahren bei dem Regenerationsschritt c) einen Schritt des Kühlens des Fluidstroms umfasst, der in den Regenerator (17) geströmt ist.

10. Verfahren nach Anspruch 9, **dadurch gekennzeichnet, dass** das Einlassen des Fluids im flüssigen Zustand mit einem Anfangsdruck in das erste Ende (3) der Kompressionskammer ausgehend von einem Behälter (13) für verflüssigtes Fluid erfolgt und dass der Schritt des Kühlens Fluid des Behälters zum Kühlen des Fluidstroms verwendet.

## Claims

1. Device for compressing a fluid, the device having a compression chamber accommodating a mobile piston (5), the device comprising a first end (2) accommodating a first end (3) of the compression chamber, the device (1) comprising a second end (4) accommodating a second end (6) of the compression chamber, the piston (5) being able to move in translation between the first end (3) and second end (6) of the compression chamber, the device (1) comprising a regeneration circuit (7) connecting the first end (3) and second end (6) of the compression chamber and having a regenerator (17), the device (1) comprising a supply pipe (8) comprising an upstream end intended to be connected to a source (13) of fluid to be compressed and a downstream end opening into the first end (3) of the compression chamber, the supply pipe (8) comprising a set of one or more valves (9), the device (1) comprising at least one pipe (10) for discharging the compressed fluid, the discharge pipe comprising an upstream end connected to the compression chamber and a downstream end intended to be connected to a receiver of the compressed fluid, the regeneration circuit (7) comprising, between the regenerator (17) and the first end (3) of the compression chamber, a heat exchanger (15) configured to exchange heat between the flow of fluid that has passed through the regenerator (17) and a cold source, **characterized in that** the source (13) of fluid to be compressed comprises a tank (13) of liquefied fluid, for example of liquefied cryogenic fluid, which is connected to the upstream end of the supply pipe (8), and **in that** the cold source comprises a pipe (12) for tapping off a cryogenic fluid flow from the source (13) of fluid and providing a passage through the heat exchanger (15).

2. Device according to Claim 1, **characterized in that** the tap-off pipe (12) branches off from the supply pipe (8) .

3. Device according to either one of Claims 1 and 2, **characterized in that** the tap-off pipe (12) describes a loop that is connected to the source (13) of fluid and configured to form a thermosiphon.

4. Device according to any one of Claims 1 to 3, **characterized in that** the tap-off pipe (12) comprises a set of one or more valves (14), for example at least one valve for regulating pressure and/or flow rate.

5. Device according to any one of Claims 1 to 4, **characterized in that** the set of one or more valves of the supply pipe (8) comprises a non-return member (9) such as a non-return valve.

6. Device according to any one of Claims 1 to 5, **characterized in that** the second end (4) of the device (1) comprises a heating system (16).

7. Device according to any one of Claims 1 to 6, **characterized in that** the first end (2) of the device (1) comprises a cooling or heating system.

8. Device according to any one of Claims 1 to 7, **characterized in that** the regenerator (17) comprises a heat exchanger tube, in particular a cylindrical tube, filled with a material configured to store and release the heat and to allow the fluid in the liquid and/or gaseous state to pass.

9. Method for compressing fluid by means of a device according to any one of Claims 1 to 8, **characterized in that** it comprises the following successive steps: a) admitting a fluid in the liquid state into the first end (3) of the compression chamber at an initial pressure via the supply pipe (8), b) compressing by moving the piston (5) towards the first end (3) of the compression chamber and transferring the fluid from the first end (3) of the compression chamber towards the second end (6) of the compression chamber via the regeneration pipe (7), the second end (4) of the device (1) being maintained at a higher temperature than the temperature at the first end (2), c) regenerating by moving the piston (5) towards the second end (6) of the compression chamber and transferring the fluid from the second end (6) of the compression chamber towards the first end (3) of the compression chamber via the regenerator, the method comprising, during the regeneration step c), a step of cooling the flow of fluid that has passed through the regenerator (17).

10. Method according to Claim 9, **characterized in that** the fluid in the liquid state is admitted at an initial pressure into the first end (3) of the compression chamber from a tank (13) of liquefied fluid, and **in that** the cooling step uses fluid from the tank to cool the flow of fluid.
